# EUROPEAN PATENT APPLICATION

(11) **EP 4 459 345 A1**
(43) Date of publication of application: **06.11.2024**
(21) Application number: 24173909.3
(22) Date of filing: 02.05.2024
(51) Int. Cl.: G02B 6/44

(54) **OPTICAL FIBER CABLE WITH ENHANCED WATER PROTECTION**

(30) Priority: 05.05.2023 IN 202311032005
(71) Applicant: Sterlite Technologies Limited, Gurugram, Haryana 122102 (IN)
(72) Inventor: Balakrishnan, Jitendra, 122102 Gurugram, Haryana (IN); Nath, Aparna, 122102 Gurugram, Haryana (IN)
(74) Representative: Petraz, Gilberto Luigi

(57) **Abstract**

The present disclosure relates to an optical fiber cable (400, 500) comprising one or more optical fibers (202), a coating (104) disposed on an outermost surface (108) of the one or more optical fibers (202), and a sheath (406) surrounding the one or more optical fibers (102). In particular, the coating (104) has a thickness less than 10 micrometres (µm). Further, the coating (104) is made up of a fluoropolymer based hydrophobic resin material such as, perfluoroalkoxy (PFA), flurorinated ethylene propylene (FEP), ethylene tetrafluoroethylene (ETFE), and terapolymer (EFEP).

## Description

### TECHNICAL FIELD

Embodiments of the present disclosure relate to the field of telecommunication fiber, and more particularly, relates to an optical fiber cable with enhanced water protection.
This application claims the benefit of Indian Application No. "202311032005" titled "OPTICAL FIBER CABLE WITH ENHANCED WATER PROTECTION" filed by the applicant on 05th May 2023, which is incorporated herein by reference in its entirety.

### BACKGROUND ART

Ingression of water inside an optical fiber cable can degrade various internal components of the optical fiber cable. Water when frozen inside the optical fiber cable can cause physical damage to the optical fiber cable, and thus possesses a threat of communication break. To avoid transmission loss and communication break due to the penetration of water inside the optical fiber, all the optical fiber cables have to undergo water penetration test (*i.e.,* 1 meter head water is applied to one end of an optical fiber cable sample of length 3 meters and the other end of the optical fiber cable sample is observed 24 hours later for any water penetration).

Different protective coatings have been proposed in order to remedy these drawbacks. So, it is known to provide optical fibers with silica of an epoxy acrylate resin coating. This is applied immediately after drawing the fiber optical, or even simultaneously. It avoids oxidizing the stretched quartz and clogging the microporosities present in the fiber, to which it provides increased mechanical strength. However, epoxy acrylate has the disadvantage of being permeable to OH ⁻ ions, and therefore soluble in water and in humidity, which leads to destruction or swelling of the epoxy acrylate protecting the fiber, protection against the external environment then losing its effectiveness over time. As a result, the optical fiber coated with epoxy acrylate is normally placed in micro-tubes coated with petroleum jelly to protect it from unwanted effects of moisture.

US Patent application "US5993965A" and EP Patent application "EP0965572A1" proposes poly-diene oligomer based hydrophobic material coating over the optical fibers to avoid water penetration inside the optical fiber cables.

DE102021117058B3 discloses a bitumen based hydrophobic gel inside a loose tube with optical fibers to restrict penetration of water to avoid water penetration inside the optical fiber cable.

Current solutions, as exemplified in references such as US5993965A and EP0965572A1, primarily center around the utilization of costly, less efficient, and heavy materials as a means to prevent water ingression. Further, bitumen-based hydrophobic gel within loose tubes, as disclosed in DE102021117058B3, lead to heightened weight and diminished packing density of optical fiber cables. Furthermore, coatings in the prior art exhibit a contact angle of less than 90 degrees, signifying reduced hydrophobicity and, consequently, a diminished efficacy in preventing water ingress.

However, there are a number of drawbacks in the above states prior arts such as they do not suggest a complete prevention of penetration of water inside each component of the optical fiber cable, and are restricted only to the water-resistance of the optical fibers inside the optical fiber cable. Moreover, bitumen based hydrophobic gel inside loose tubes of the optical fiber cable results in an increase of the overall weight of the optical fiber cable and affects the packing density of the optical fiber cable. Further, the coating materials as suggested in the prior art references provide a contact angle of less than 90 degrees (90°) and thus, provide less hydrophobicity.

The optical communication industry necessitates a solution that is cost-effective, easy to implement, highly effective without the requirement for supplementary water-blocking components, and lightweight.

Accordingly, to overcome the disadvantages of the prior art, there is an urgent need for a technical solution that overcomes the above-stated limitations in the prior arts. Thus, the present disclosure proposes an optical fiber cable with a coating that provides enhanced water protection.

### SUMMARY OF THE DISCLOSURE

Embodiments of the present disclosure relates to an optical fiber cable comprising one or more optical fibers, a coating disposed on an outermost surface of the one or more optical fibers, and a sheath surrounding the one or more optical fibers. Particularly, the coating is made up of a fluoropolymer based hydrophobic resin material.

In accordance with an embodiment of the present disclosure, the optical fiber cable further comprises one or more layers between the one or more optical fibers and the sheath.

According to the first aspect of the present disclosure, the hydrophobic material is selected from at least one of, perfluoroalkoxy (PFA), flurorinated ethylene propylene (FEP), ethylene tetrafluoroethylene (ETFE), and terapolymer (EFEP).

According to the second aspect of the present disclosure, the one or more optical fibers are in the form of at least one of, one or more individual optical fibers, one or more flat ribbons and one or more ribbons.

According to the third aspect of the present disclosure, the ribbon of the one or more ribbons and the one or more ribbon bundles is an IBR.

According to the fourth aspect of the present disclosure, contact angle between water and the one or more optical fibers disposed with the coating on the outermost surface is equal to or more than 100 degrees. Moreover, the contact angle between water and the one or more ribbons disposed with the coating on the outermost surface is equal to or more than 100 degrees.

According to the fifth aspect of the present disclosure, the coating has a predefined thickness (T) that is less than 10 micrometres (µm).

According to the sixth aspect of the present disclosure, the coating is disposed on the outermost surface of the one or optical fibers by way of at least one of, an extrusion process, a vapor spray deposition process, and passing through a liquid resin.

In accordance with an embodiment of the present disclosure, the coating is a colored coating.

According to the seventh aspect of the present disclosure, the outermost surface is selected from one of, a primary coating, a secondary coating, a color layer, a ribbon bond matrix, or a combination thereof.

The foregoing objectives of the present disclosure are attained by providing an optical fiber cable with enhanced water protection.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a pictorial snapshot illustrating an optical fiber with hydrophobic coating in accordance with an embodiment of the present disclosure;
Fig. 2 is a pictorial snapshot illustrating a flat ribbon with hydrophobic coating in accordance with an embodiment of the present disclosure;
Fig. 3 is a pictorial snapshot illustrating an intermittently bonded ribbon (IBR) with hydrophobic coating in accordance with an embodiment of the present disclosure;
Fig.4 is a snapshot illustrating the optical fiber cable having one or more buffer tubes in accordance with an embodiment of the present disclosure;
Fig.5 is a snapshot illustrating the optical fiber cable having one or more ribbon bundles in accordance with an embodiment of the present disclosure.

The optical fiber cable is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

**The following brief definition of terms shall apply throughout the present disclosure:**
Term "coating" as used herein refers to a layer covering the outermost surface of the one or more optical fibers and/or optical fiber ribbons of the optical fiber cable.
Term "fluoropolymer" as used herein refers to a fluorocarbon-based polymer with multiple carbon-fluorine bonds. It is characterized by a high resistance to solvents, acids, and bases.
Term "sheath" as used herein refers to an outermost layer or an outermost jacket of the optical fiber cable that holds and protects the contents of the optical fiber cable.
Term "optical fiber ribbon" as used herein refers to a ribbon or number of optical fibers connected to each other in the form of a ribbon. Commonly, the optical fiber ribbons are flat or rollable.
The terms "flat ribbon" and "flat ribbon fiber" as used herein are referred to a type of optical fiber ribbon formed in the form of a flat strip.
Term "optical fiber ribbon bundle" as used herein refers to a bundle of optical fiber ribbons.
Term "rollable ribbon fiber" as used herein refers to an optical fiber ribbon that can be rolled into a cylindrical shape.
Term "intermittently bonded ribbon (IBR)" as used herein refers to as intermittently bonded ribbon fiber cable consisting of fibers such that adjacent optical fibers are bonded (in a planned manner) using matrix material with unbonded portions in-between the consecutive bonded portions, that makes the IBR capable of being rolled up in the form of bundles.
Term "extrusion process" as used herein refers to a process of creating desired shapes by forcing metals, thermoplastics or other material through a series of dies.
Term "bonding resin" as used herein refers to a curable matrix material that intermittently bonds adjacent optical fibers of an IBR.
Term "wettability" as used herein refers to an ability of a liquid to maintain contact with a solid surface.
Term "contact angle" as used herein refers to an angle (conventionally measured through the liquid) where a liquid-vapor interface meets the solid surface. The contact angle quantifies the wettability of the solid surface by the liquid.
Term "hydrophobicity" as used herein refers to a tendency of non-polar molecules to form aggregates in order to reduce their surface of contact with polar molecules such as water.
Term "hydrophobic material" as used herein refers to non-polar materials with a low affinity to water capable of repelling water.
Term "vapor spray deposition process" as used herein refers to a process of deposition of a layer of a substance by spraying the substance in the form of vapors.
Term "single core fiber" as used herein refers to an optical fiber having only one core.
Term "multi-core fiber" as used herein refers to an optical fiber having more than one cores.
Term "multi-mode fiber" as used herein refers to a type of optical fiber that enables multiple light modes to be propagated inside the optical fiber and limits the maximum length of a transmission link by way of model dispersion.
Term "single mode fiber" as used herein refers to a type of optical fiber designed to carry only a single light mode or ray of light.

The invention tackles the concern of water ingress into optical fiber cables, a phenomenon that can result in optical degradation and physical damage, thereby posing a significant risk of communication disruptions.

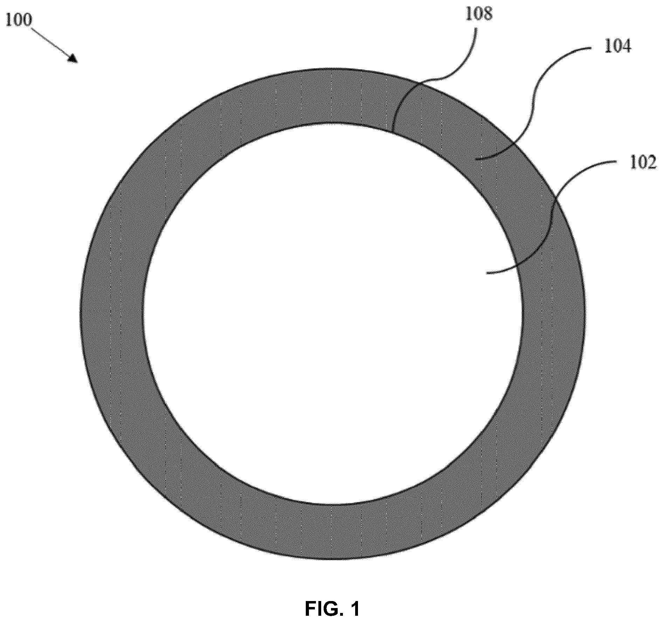

Fig. 1 is a pictorial snapshot illustrating an optical fiber 100 with hydrophobic coating in accordance with one embodiment of the present disclosure. In particular, the coated optical fiber 100 may have a coating 104 externally surrounding the optical fiber 102. The optical fiber 102 may be capable of transferring information in the form of optical signals (i.e., using light sources). Moreover, the optical fiber 102 may be selected from one of, a single mode fiber and a multimode fiber. Further, the optical fiber 102 may be selected from one of, a single-core fiber, and a multi-core fiber. In alternative aspects of the present disclosure, the optical fiber 102 may have one or more properties possessed by at least one of the above mentioned types of optical fibers.

In accordance with an embodiment of the present disclosure, the coating 104 may be disposed on an outermost surface 108 of the optical fiber 102. In particular, the coating 104 may be made up of a fluoropolymer based hydrophobic resin material selected from but not limited to, Perfluoroalkoxy (PFA), flurorinated ethylene propylene (FEP), ethylene tetrafluoroethylene (ETFE), and terapolymer (EFEP). Aspects of the present disclosure are intended to include and/or otherwise cover any type of the hydrophobic resin material, including known, related, and later developed materials (similar to PFA, FEP, ETFE or EFEP) that may facilitate to achieve hydrophobicity of the optical fiber 100, and thus must not be considered as a limitation to the present disclosure.

In accordance with an embodiment of the present disclosure, contact angle between water and the coated optical fiber 100 disposed with the coating 104 on the outermost surface 108 of the optical fiber 102 may be equal to or more than 100 degrees (100°). Particularly, a higher contact angle between water and the coated optical fiber 100 may result in a higher hydrophobicity and therefore, poor wettability of the coated optical fiber 100.

In accordance with an embodiment of the present disclosure, the coating 104 may have a predefined thickness (T) less than 10 micrometres (µm) resulting in less increase in a diameter of the optical fiber 102, and thus do not add up much to a weight of the optical fiber 102.In alternative embodiments of present disclosure, the coating 104 may not have a predefined thickness (T) less than 10 micrometres (µm).

In accordance with an embodiment of the present disclosure, the coating 104 may be disposed on the outermost surface of the optical fiber 102 by way of but not limited to, an extrusion process, a vapor spray deposition process, and passing through a liquid resin. In particular, the coating 104 may further be disposed of on the optical fiber 102 by dipping the optical fiber 102 in a liquid resin with the hydrophobic material present in dispersion form. Aspects of the present disclosure are intended to include and/or otherwise cover any type of coating process, including known, and/or related to later developed technologies, and thus must not be considered as a limitation to the present disclosure.

In accordance with an embodiment of the present disclosure, the coating 104 may be a colored coating, and thus may eliminate a need of an additional color layer on the optical fiber 102. In alternative embodiments of present disclosure, the coating may not be a colored coating.

In accordance with an embodiment of the present disclosure, the outermost surface 108 may be selected from but not limited to a primary coating, a secondary coating, a color layer of the optical fiber 102. In alternative embodiments of present disclosure, the outermost surface 108 may include "n" number of coatings.

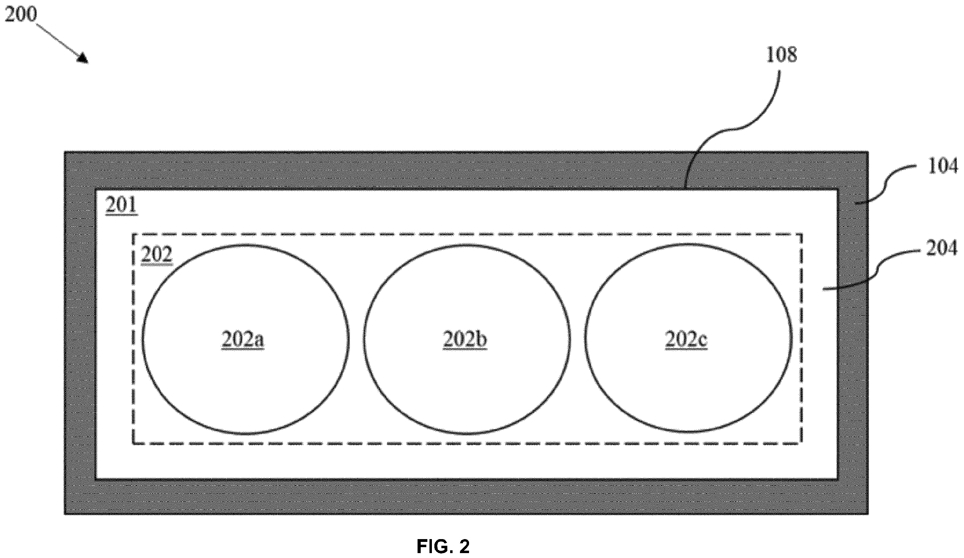

Fig. 2 is a pictorial snapshot illustrating a flat ribbon with hydrophobic coating in accordance with another embodiment of the present disclosure. The coated flat ribbon 200 may have the coating 104 externally surrounding the flat ribbon 201. In particular, the flat ribbon 201 may have one or more optical fibers 202 of which first through third optical fibers are shown as 202a-202c. In various other aspects, the flat ribbon 201 may have any number of optical fibers without deviating from the scope of the present disclosure and each optical fiber of the one or more optical fibers 202 is adapted to serve one or more functionalities in a manner similar to the functionalities of the first through third optical fibers 202a-202c as discussed herein.

In accordance with an embodiment of the present disclosure, the flat ribbon 201 may have a matrix resin 204 surrounding the one or more optical fibers 202.

In some aspects of the present disclosure, the outer boundary of the flat ribbon 201 may be the outermost surface 108 having the one or more optical fibers 202. Particularly, the outermost surface 108 of the one or more optical fibers 202 (i.e., the outer boundary of the flat ribbon 201) may be surrounded by the coating 104 to make the coated flat ribbon 200.

In accordance with an embodiment of the present disclosure, the contact angle between water and the coated flat ribbon 200 with the coating 104 may be equal to or more than 100 degrees (100°). Moreover, the coating 104 may have the predefined thickness (T) less than 10 µm. Further, the coating 104 may be disposed on the outermost surface of the flat ribbon 201 by way of but not limited to, the extrusion process, the vapor spray deposition process, and passing through the liquid resin. Alternatively, the coating 104 may further be disposed on the flat ribbon 201 by dipping the flat ribbon 201 in the liquid resin with the hydrophobic material present in the dispersion form. Aspects of the present disclosure are intended to include and/or otherwise cover any type of coating process, including known, and/or related to later developed technologies, and thus must not be considered as a limitation to the present disclosure.

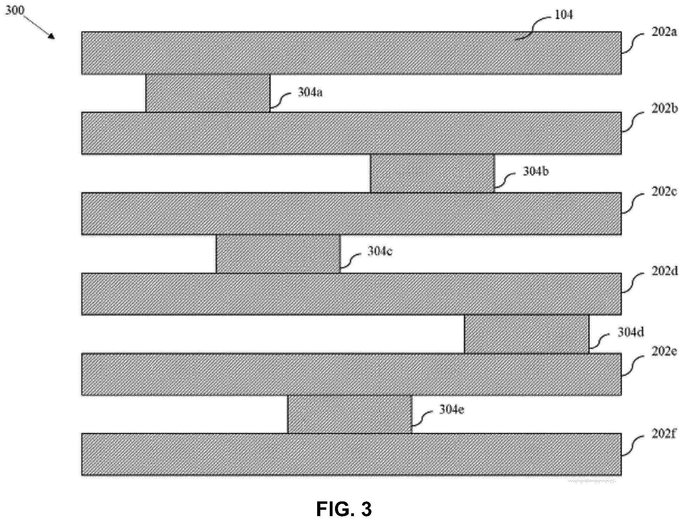

Fig. 3 is a pictorial snapshot illustrating an intermittently bonded ribbon (IBR) with hydrophobic coating in accordance with an embodiment of the present disclosure. The ribbon 300 may be an intermittently bonded ribbon (IBR) (hereinafter interchangeably referred to and designated as "IBR 300"). Particularly, the IBR 300 may have the coating 104 externally surrounding the IBR 300. Moreover, the IBR 300 may have one or more optical fibers 202 of which first through sixth optical fibers 202a-202f are shown. In alternate aspects, the IBR 300 may have any number of optical fibers without deviating from the scope of the present disclosure. And, each optical fiber is adapted to serve one or more functionalities in a manner similar to the functionalities of the first through sixth optical fibers 202a-202f as discussed herein.

In accordance with an embodiment of the present disclosure, the one or more optical fibers 202 may be connected to each other by way of one or more bonding resins 304 of which first through fifth bonding resins 304a-304e as shown in FIG. 3. In particular, the first bonding resin 304a may connect the first optical fiber 202a to the second optical fiber 202b. The second bonding resin 304b may connect the second optical fiber 202b with the third optical fiber 202c. The third bonding resin 304c may connect the third optical fiber 202c with the fourth optical fiber 202d. And, the fourth bonding resin 304d may connect the fourth optical fiber 202d with the fifth optical fiber 202e. Further, the fifth bonding resin 304e may connect the fifth optical fiber 202e with the sixth optical fiber 202f. In alternative aspects of the present disclosure, "N" number of optical fibers of the optical fibers 202 may be connected by way of "N-1" number of bonding resins 304.

In accordance with an embodiment of the present disclosure, the one or more bonding resins 304 may be irregularly placed between the one or more optical fibers 202. Alternatively, the one or more bonding resins 304 may be placed at pre-defined positions between the one or more optical fibers 202.

Although FIG. 3 illustrates that the IBR 300 has five bonding resins (*i.e.,* the first through fifth bonding resins 304a-304e), it will be apparent to a person skilled in the art that the IBR 300 may have any number of bonding resins without deviating from the scope of the present disclosure. In such a scenario, each bonding resin is adapted to serve one or more functionalities in a manner similar to the functionalities of the first through fifth bonding resins 304a-304e as discussed herein.

In accordance with an embodiment of the present disclosure, the outer boundary of the IBR 300 may be the outermost surface of the one or more optical fibers 202. And, the outermost surface of the one or more optical fibers 202 (*i.e.,* the outer boundary of the IBR 301) may be surrounded by the coating 104. The contact angle between water and the IBR 300 disposed with the coating 104 on the outermost surface may be equal to or more than 100 degrees (100°). The coating 104 may have the predefined thickness (T) that may be less than 10 µm. Further, the coating 104 may be disposed on the outermost surface of the intermittently connected one or optical fibers 202 by way of at least one of, the extrusion process, the vapor spray deposition process, and passing through the liquid resin. Furthermore, the coating 104 may be disposed on the intermittently connected one or more optical fibers 202 by dipping the one or more optical fibers 202 in the liquid resin with the hydrophobic material present in the dispersion form.

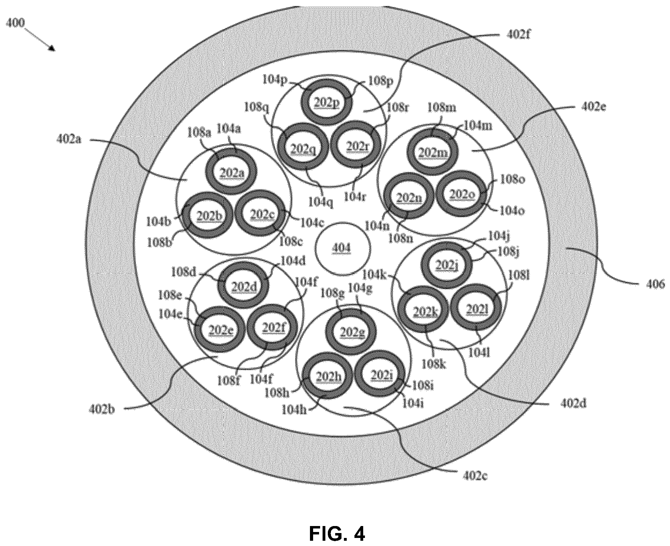

Fig.4 is a snapshot illustrating the optical fiber cable 400 having one or more buffer tubes in accordance with an embodiment of the present disclosure.closure. The optical fiber cable 400 may have one or more buffer tubes 402, one or more strength members 404, and a sheath 406. Further, the one or more buffer tubes 402 may have first through sixth buffer tubes 402a-402f. In various alternative aspects, the optical fiber cable 400 may have any number of buffer tubes without deviating from the scope of the present disclosure where each buffer tube is adapted to serve one or more functionalities in a manner similar to the functionalities of the first through third buffer tube 402a-402f as discussed herein.

In accordance with an embodiment of the present disclosure, each buffer tube of the one or more buffer tubes 402 may have one or more individual optical fibers 202. Fig. 4 illustrates that each buffer tube of the one or more buffer tubes 402 has three optical fibers. In alternative aspects, each buffer tube of the one or more buffer tubes 402 may have any number of optical fibers without deviating from the scope of the present disclosure. And each optical fiber is adapted to serve one or more functionalities in a manner similar to three optical fibers of each buffer tube of one or more buffer tubes 402.

In an exemplary aspect of the present disclosure, the first buffer tube 402 may have the first through third optical fibers shown as 202a-202c. The second buffer tube 402b may have fourth through sixth optical fibers shown as 202d-202f. The third buffer tube 402c may have seventh through ninth optical fibers shown as 202g-202i. The fourth buffer tube 402d may have tenth through twelfth optical fibers shown as 202j-202l. The fifth buffer tube 402e may have thirteenth through fifteenth optical fibers shown as 202m-202o. The sixth buffer tube 402f may have sixteenth through eighteenth optical fibers shown as 202p-202r. Each optical fiber of one or more optical fibers 202 may possess one or more properties same or similar to the optical fiber 100 as shown in Fig. 1.

In accordance with an embodiment of the present disclosure, the first through eighteenth optical fibers shown as 202a-202o may have first through eighteenth outer surfaces 108a-108o, respectively (hereinafter cumulatively referred to and designated as "the outermost surface 108"). The first through eighteenth optical fibers shown as 202a-202o may have first through eighteenth coatings shown as 104a-104o (hereinafter cumulatively referred to and designated as "the coating 104") on the first through eighteenth outer surfaces 108a-108o respectively.

Each coating of the first through eighteenth coatings shown as 104a-104o may possess one or more properties same or similar to one or more properties of the coating 104 (of Fig. 1).

In accordance with an embodiment of the present disclosure, the contact angle between water and the one or more optical fibers 202 disposed with the coating 104 on the outermost surface 108 may be equal to or more than 100 degrees (100°). The coating 104 may have the predefined thickness (T) less than 10 µm. Further, the coating 104 may be disposed on the outermost surface of the one or optical fibers 202 by the extrusion process, the vapor spray deposition process, and passing through the liquid resin. Furthermore, the coating 104 may be disposed on the one or more optical fibers 202 by dipping the one or more optical fibers 202 in the liquid resin with the hydrophobic material present in the dispersion form. Aspects of the present disclosure are intended to include and/or otherwise cover any type of coating process, including known, and/or related to later developed technologies, and thus must not be considered as a limitation to the present disclosure.

The coating 104 may be the colored coating, and thus may eliminate a need of an additional color layer on the optical fibers 202.

In accordance with an embodiment of the present disclosure, the outermost surface 108 may be selected from at least one of, the primary coating, the secondary coating, the color layer of the optical fibers 202.

In accordance with an embodiment of the present disclosure, the sheath 406 may be the outermost layer of the optical fiber cable 400 and protect the optical fiber cable 400 from breaking and/or abrasion.

In accordance with an embodiment of the present disclosure, the one or more strength members 404 may provide structural strength to the optical fiber cable 400. In various alternate aspects, the optical fiber cable 400 may have more than one strength member without deviating from the scope of the present disclosure. In such a scenario, each strength member is adapted to serve one or more functionalities in a manner similar to the functionalities of the strength member 404 as discussed herein. The size of one or more strength members 404 is not relative to the size of the one or more buffer tubes 402. And, the size of the one or more buffer tubes 402 is upscaled to emphasize on the one or more buffer tubes 402.

In some aspects, the size of the one or more strength members 404 may be greater than the size of the one or more buffer tubes 402, and thus may not be considered as a limitation of the present disclosure.

In accordance with an embodiment of the present disclosure, each buffer tube of the one or more buffer tubes 402 may further have an extra coating (similar to the coating 104) outside the buffer tube of the one or more buffer tubes 402.

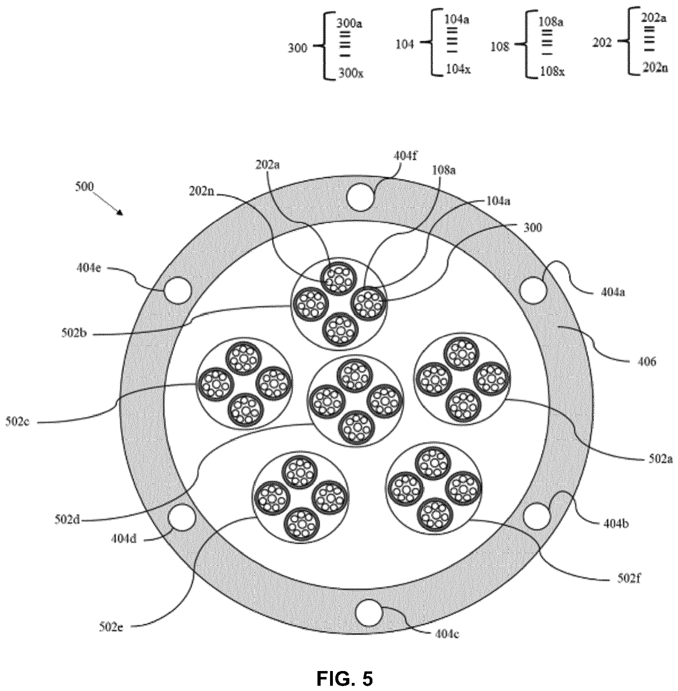

Fig.5 is a snapshot illustrating the optical fiber cable having one or more ribbon bundles in accordance with an embodiment of the present disclosure. The optical fiber cable 500 may further have one or more strength members 404 and the sheath 406. The one or more ribbon bundles 502 may be in the form of IBR bundles (hereinafter interchangeably referred to and designated as "one or more IBR bundles 502"), such that the plurality of ribbons of each ribbon bundle may be IBRs. Particularly, the one or more IBR bundles 502 may have first through sixth IBR bundles 502a-502f.

In various alternate aspects, the optical fiber cable 500 may have any number of IBR bundles without deviating from the scope of the present disclosure. And, each IBR bundle of the one or more IBR bundles 502 is adapted to serve one or more functionalities in a manner similar to the functionalities of the first through sixth IBR bundles 502a-502f as discussed herein.

In accordance with an embodiment of the present disclosure, each IBR bundle of the one or more IBR bundles 502 may have the one or more IBRs 300. The one or more IBR bundles 502 may have the one or more IBRs 300 in a rolled-up form. Particularly, each IBR bundle of the one or more IBR bundles 502 has four IBRs in the rolled-up form, it will be apparent to a person skilled in the art that the scope of the present disclosure is not limited to it. In various alternate aspects, each IBR bundle of the one or more IBR bundles 502 may have any number of IBRs in the rolled-up form without deviating from the scope of the present disclosure. In such a scenario, each IBR of one or more IBRs 300 is adapted to serve one or more functionalities in a manner similar to the functionalities of the four IBRs of each IBRs of the one or more IBRs 300.

Each IBR of the one or more IBRs 300 in the rolled-up form may have one or more optical fibers 202. In particular, each IBR of the one or more IBRs 300 in the rolled-up form is shown to have "n" number of optical fibers (shown as 202a-202n) to make the illustration concise and clear. In alternative embodiments, the optical fibers 202 can have any number of optical fibers, and thus should not be considered as a limitation of the present disclosure.

In some aspects of the present disclosure, each optical fiber of each IBR of the one or more IBRs 300 in the rolled-up form may be connected by way of one or more bonding resins (similar to the one or more bonding resins 304).

In accordance with an embodiment of the present disclosure, each IBR of the one or more IBRs 300 in the rolled-up form may have an outer boundary such that the outer boundary of each IBR of one or more IBRs 300 in the rolled-up form shown as 108a-108x may be surrounded by a coating (104a-104x) (hereinafter cumulatively referred to and designated as "the coating 104").

In accordance with an embodiment of the present disclosure, the contact angle between water and the one or more ribbons 300 that are disposed with the coating 104 on the outermost surface 108 may be equal to or more than 100 degrees (100°). The coating 104 may have the predefined thickness (T) that may be less than 10 µm. And, the coating 104 may be disposed on the outermost surface of the one or optical fibers 202 by the extrusion process, the vapor spray deposition process, and passing through the liquid resin. Further, the coating 104 may be disposed on the one or more optical fibers 202 by dipping the one or more optical fibers 202 in the liquid resin with the hydrophobic material present in the dispersion form. Aspects of the present disclosure are intended to include and/or otherwise cover any type of coating process, including known, and/or related to later developed technologies, and thus must not be considered as a limitation to the present disclosure.

In accordance with an embodiment of the present disclosure, the sheath 406 may be the outermost layer of the optical fiber cable 500 and may protect the optical fiber cable 100 from breaking and/or abrasion.

In accordance with an embodiment of the present disclosure, the one or more strength members 404 may be embedded in the sheath 406 to provide structural strength to the optical fiber cable 500. The one or more strength members 404 may have first through sixth strength members 404a-404f. In various other aspects, the optical fiber cable 500 may have any number of strength members without deviating from the scope of the present disclosure. In such a scenario, each strength member of the one or more strength members 404 is adapted to serve one or more functionalities in a manner similar to the functionalities of the first through sixth strength members 404a-404f as discussed herein.

In accordance with alternative embodiment of the present disclosure, the one or more strength members 404 may not be embedded in the sheath 406.

In accordance with alternative embodiment of the present disclosure, the optical fiber cable (400, 500) comprises one or more optical fibers (202), a coating (104) disposed on the one or more optical fibers (202), where one or more optical fibers (202) are uncoated or coated optical fibers, where the coating (104) is made up of a fluoropolymer based hydrophobic resin material and a sheath (406) encapsulating the one or more optical fibers (202). Particularly, the coating (104) is disposed on and on the outermost surface (108) of the one or more optical fibers (202). Moreover, the hydrophobic material is selected from at least one of, perfluoroalkoxy (PFA), flurorinated ethylene propylene (FEP), ethylene tetrafluoroethylene (ETFE), and terapolymer (EFEP). Further, one or more layers between the one or more optical fibers (202) and the sheath (406). And, the coating (104) has a predefined thickness (T) that is less than 10 micrometres (µm).

The key attributes of the present invention lies in the utilization of a fluoropolymer-based hydrophobic resin material coating, which envelops the outermost surface of optical fibers. This coating ensure thorough water resistance, characterized by a high contact angle, while minimizing any adverse effects on cable weight and packing density. Further, the hydrophobic characteristics of the fluoropolymer-based coating, coupled with its application on the outermost surface of optical fibers, synergistically provide a solution that effectively prevents water ingress into all components of the optical fiber cable. Notably, this coating is easy to apply and adds minimal additional weight to the optical fiber cable.

In practical scenarios, the optical fiber cable featuring the fluoropolymer-based coating exhibits exceptional water resistance, ensuring the preservation of communication integrity even in adverse environmental conditions. This characteristic renders the cable suitable for a myriad of applications, including outdoor installations and deployments in areas susceptible to water exposure.

In a broader context, the disclosed invention covers optical fiber cables with water blocking requirements, providing a versatile and comprehensive solution to address this challenges in the optical communication industry. Further, the disclosed invention employs a hydrophobic resin material coating based on fluoropolymer, delivering superior water resistance in contrast to prior art references. This coating envelops the outermost surface of optical fibers, effectively impeding water penetration into each constituent of the cable. In addition to its primary function of preventing water penetration, the fluoropolymer-based coating presents several advantages such as a high contact angle with water, equal to or exceeding 100 degrees, ensuring superior hydrophobicity. The coating maintains a predefined thickness of less than 10 micrometers, contributing to low weight characteristics. The application process allows for flexibility through methods such as extrusion, vapor spray deposition, or liquid resin passage.

As discussed earlier, there is a need for an optical fiber cable with enhanced water resistance. Advantageously, the optical fiber cables 400, 500 of the present disclosure may provide a higher water resistance for the components lying inside the optical fiber cables 400, 500. The optical fiber cables 400, 500 of the present disclosure may also provide an ease of deployment, as the optical fiber cables 400, 500 may be light weighted. Further, optical fiber cables 400, 500 has improved chemical resistance to the external environment, in particular against water and humidity, has improved mechanical strength, for a given diameter, is chemically compatible with the core of the fiber.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fiber cable (400, 500) **characterized in that**:
one or more optical fibers (202);
a coating (104) that is disposed on an outermost surface (108) of the one or more optical fibers (202), where the coating (104) is made up of a fluoropolymer based hydrophobic resin material; and
a sheath (406) that surrounds the one or more optical fibers (202).

2. The optical fiber cable (400, 500) of claim 1, where the hydrophobic material is selected from at least one of, perfluoroalkoxy (PFA), flurorinated ethylene propylene (FEP), ethylene tetrafluoroethylene (ETFE), and terapolymer (EFEP).

3. The optical fiber cable (400, 500) of claim 1, where the one or more optical fibers (102) are in the form of at least one of, one or more individual optical fibers (102), one or more flat ribbons and one or more ribbons (300).

4. The optical fiber cable (400, 500) of claim 3, where the ribbon of the one or more ribbons (300) and the one or more ribbon bundles (502) is an IBR.

5. The optical fiber cable (400, 500) of claim 1, where a contact angle between water and the one or more optical fibers (202) that are disposed with the coating (104) on the outermost surface (108) is equal to or more than 100 degrees.

6. The optical fiber cable (400, 500) of claim 1, where the contact angle between water and the one or more ribbons (200, 300) that are disposed with the coating (104) on the outermost surface (108) is equal to or more than 100 degrees.

7. The optical fiber cable (400, 500) of claim 1, where the coating (104) has a predefined thickness (T) that is less than 10 micrometres (µm).

8. The optical fiber cable (400, 500) of claim 1, where the coating (104) is disposed on the outermost surface of the one or optical fibers (202) by way of at least one of, an extrusion process, a vapor spray deposition process, and passing through a liquid resin.

9. The optical fiber cable (202) of claim 1, where the outermost surface (108) is selected from one of, a primary coating, a secondary coating, a color layer, a ribbon bond matrix, or a combination thereof.

10. The optical fiber cable (202) of claim 1, where the coating (104) is a colored coating.

11. An optical fiber cable (400, 500) **characterized in that**:
one or more optical fibers (202);
a coating (104) disposed on the one or more optical fibers (202), where one or more optical fibers (202) are uncoated or coated optical fibers, where the coating (104) is made up of a fluoropolymer based hydrophobic resin material; and
a sheath (406) encapsulating the one or more optical fibers (202).

12. The optical fiber cable (400, 500) of claim 11, where the coating (104) disposed on an on the outermost surface (108) of the one or more optical fibers (202).

13. The optical fiber cable (400, 500) of claim 11, where the hydrophobic material is selected from at least one of, perfluoroalkoxy (PFA), flurorinated ethylene propylene (FEP), ethylene tetrafluoroethylene (ETFE), and terapolymer (EFEP).

14. The optical fiber cable (202) of claim 1 further comprising one or more layers between the one or more optical fibers (202) and the sheath (406).

15. The optical fiber cable (400, 500) of claim 1, where the coating (104) has a predefined thickness (T) that is less than 10 micrometres (µm).
